# EUROPÄISCHE PATENTSCHRIFT

(11) **EP 0 610 935 B1**
(45) Veröffentlichungstag und Bekanntmachung des Hinweises auf die Patenterteilung: **22.01.1997**
(21) Anmeldenummer: 94102071.1
(22) Anmeldetag: 10.02.1994
(51) Int. Cl.: H01S 3/02

(54) **Laser**
Laser
Laser

(30) Priorität: 10.02.1993 DE 4303956
(43) Veröffentlichungstag der Anmeldung: 17.08.1994
(73) Patentinhaber: Langner, Walter, D-82319 Starnberg (DE); Deutscher, Wolfgang, 80992 München (DE)
(72) Erfinder: Langner, Walter, D-82319 Starnberg (DE); Deutscher, Wolfgang, 80992 München (DE)
(74) Vertreter: Zipse + Habersack

(56) Entgegenhaltungen:
- EP-A- 0 251 719
- WO-A-81/01348
- DE-U- 9 302 688
- US-A- 3 659 220
- US-A- 3 831 104
- US-A- 4 525 842
- Tunable Solid State Lasers, Proceedings of the first International Conference, La Jolla, Calif., June 13-15, 1984, Seiten 53-57

## Beschreibung

Die Erfindung betrifft einen Laser, insbesondere Festkörperlaser, mit einer Pumpquelle, z.B. Pumplampe, einem aktiven Material, insbesondere einem Laserstab, und zumindest einer in Verlängerung des aktiven Materials angeordneten optischen, elektromechanischen oder mechnischen Komponente, z.B. Spiegel, Güteschalter, Modenblende etc., als Laserresonator.

Die oben genannten einzelnen Komponenten des Lasers werden bislang als Einzelkomponenten auf einer Schiene justiert. Dies bedingt relativ große Abmessungen des Lasers aufgrund der relativ massiven Justageeinrichtung. Die für eine exakte Justierung erforderliche feinmechanische Justageeinrichtung führt weiterhin zu einem Ansteigen der Produktions-, Montage- und Servicekosten.

Das Kühlsystem ist ein Kühlmittel- oder Kühlwasserkreislauf, welcher zur Kühlung des Laserstabs, der Pumpquelle und anderer Komponenten des Lasers vorgesehen ist.

Die Anordnung eignet sich insbesondere für Laser mittlerer bis hoher Leistung im Bereich von 0,1 Watt bis in den Kilowattbereich. Prädestiniert ist die erfindungsgemäße Anordnung für Laser im Leistungsbereich 0,1 Watt bis 150 Watt.

Dieses Gehäuse kann aus einem Block im Spritzgußverfahren oder in Fräsfertigung hergestellt werden. Als Material für das Gehäuse eignet sich Kunststoff, insbesondere faserverstärkter Kunststoff oder Glas und Keramik oder entsprechend beschichtete oder geschützte Metalle. Zusätzliche Komponeten, wie z.B. Güteschalter, Modenblende, Shutter, Frequenzverdoppler-Kristall, Polarisator ect., können vorzugsweise ebenfalls in dem Gehäuse gut geschützt und platzsparend angeordnet werden. Außerhalb des Resonators befindliche Strahlführungskomponenten können ebenfalls in dem Gehäuse untergebracht werden, wie z.B: Strahlaufweitung, Focussierung, Lichtwellenleiter-Ankopplung, Umlenkspiegel und -prismen, Pilotstrahlquellen, Leistungs- und Energiemeßgeräte, Beobachtungssysteme, Temperaturkompensationen und dergleichen.

In einer vorteilhaften Weiterbildung der Erfindung besteht das Gehäuse aus einer Glaskeramik, die einen niedrigen Temperaturkoeffizienten aufweist, so daß eine geometrisch exakte Ausrichtung des Laserresonators, insbesondere die Position der opt. Komponenten zueinander, auch bei unterschiedlichen Temperaturbedingungen erhalten bleibt.

Es ist weiterhin vorteilhaft, in einem Kunststoffgehäuse mechanische Verstärkungselemente in Form von Stäben oder Winkeln aus Glas, verstärktem Kunststoff, Glaskeramik oder Metall einzulassen, an denen die optischen Komponenten befestigt sind. Auf diese Weise wird die elektrische Isolationsfähigkeit und leichte Verarbeitbarkeit des Kunststoffs mit der mechanischen und thermischen Stabilität der geometrischen Abmessungen der Verstärkungselemente kombiniert. Die Elemente sollten vorzugsweise erschütterungsgedämpft in dem Gehäuse gehalten sein.

In dem Buch "Tunable Solid State Lasers, Proceedings of the First International Conference, La Jolla, Calif., June 13-15, 1984", Springer-Verlag 1985, Seiten 53-57, ist ein Laser dargestellt, der eine Pumpkammer aufweist, die in Form eines monolithischen Blockes ausgebildet ist, wobei die umgebende Laseranordnung Anschlüsse für einen Kühlkreislauf aufweist.

Es ist Aufgabe der Erfindung, einen Laser zu schaffen, der mit wenig Aufwand eine kompakte und erschütterungsunempfindliche Anordnung und genaue Ausrichtung und Halterung der Laserkomponenten erlaubt.

Diese Aufgabe wird erfindungsgemäß durch die Merkmale des Anspruchs 1 gelöst. Vorteilhafte Weiterbildungen der Erfindung sind Gegenstand der Unteransprüche.

Erfindungsgemäß enthält der monolithische Gehäuseblock zur Aufnahme aller Laserkomponenten Hohlräume für unterschiedliche Funktionen, wie z. B. Pumpquellenraum, Raum zur Aufnahme des Laserstabs und Raum zur Aufnahme des Kühlwasserkreislaufs. Hierdurch läßt sich die Raumaufteilung der Lasereinheit optimieren und eine Kühlung der Laserkomponenten auch für Laser mittlerer bis hoher Leistung bis in den Kilowattbereich realisieren.

Anstelle von Glaskeramikstäben lassen sich auch andere mechanisch stabilisierende Komponenten, wie z.B. Metallstäbe oder - winkel in axialer Richtung des länglichen Gehäuses einbauen, z.B. wenn das Gehäuse aus Kunststoff besteht, in das Gehäuse eingießen oder mechanisch einarbeiten. Die Verwendung von Winkeln zur Stabilisierung bringt den Vorteil erhöhter Verwindungssteifigkeit. Die Stabilisierungskomponenten führen aufgrund der mechanischen Versteifung des Gehäuses und/oder einer mechanischen Entkopplung zwischen den Trägern der optischen Komponenten und dem Gehäuse zu einer Lagefixierung der optischen Komponenten zueinander.

Aufgrund der Erfindung läßt sich der Laser mit einem geringen Montageaufwand in sehr kompakten Abmessungen herstellen. Eine genaue Justage des Laserresonators ist bei der Herstellung leicht zu realisieren. Höchste Genauigkeit läßt sich durch Laserbearbeitung des fertig hergestellten Gehäuseblocks erzielen. Eine nachträgliche Verstellung dieser Justage ist aufgrund des elastischen formstabilen und erschütterungsunempfindlichen monolithischen Gehäuseblocks nur bei größeren mechanischen Einwirkungen möglich.

In dem monolithischen Gehäuseblock können die Wandstärken zur Unterteilung des Hohlraums im Gehäuse in unterschiedliche Funktionszonen, wie Pumpquellenraum, Raum zur Aufnahme des Laserstabs und Kühlwasserkreislauf, dünn gehalten werden. Hierdurch läßt sich die Raumaufteilung in der Lasereinheit optimieren. Es ist kein Verschraub- und Justageaufwand nötig, wodurch Abmessungs-, Gewichts- und Materialeinsparungen und damit auch Kosteneinsparungen erzielt werden. Der Laserresonator bildet eine starke, untrennbare Einheit in kompakter Form und ist daher unempfindlich gegen mechanische Einwirkungen. Er ist weiterhin abgedichtet gegen das Eindringen von Staub, Wasser, Dämpfen und Öl. Der Service- und Wartungsaufwand ist durch die geschlossene kompakte Bauform äußerst gering.

Für einfachere Anwendungen, bei denen geringere Anforderungen an Leistungsstabilität und Strahlqualität bestehen, sind die zur Aufnahme elektrischer, optischer und mechanischer Strahlführungs- und Sensorkomponenten erforderlichen Teile aus Kunststoff hergestellt.

Bei Festkörperlasern, welche in Modenstruktur, Leistungsstabilität, Spiegeljustage, Wellenlänge z.B. Frequenzverdoppelung möglichst geringen mechanischen und thermischen Formveränderungen unterworfen sein dürfen, wird das Kunststoffgehäuse faser- oder materialverstärkt. Durch die elastischen Eigenschaften des Gehäusematerials stellt sich die Resonatorgeometrie kurze Zeit nach dem Einwirken von Verformungsenergie innerhalb der elastischen Grenzen wieder ein. Durch eine geeignete Wahl des Armierungsmaterials, z.B. Glaskeramik, werden geringste thermische Materialausdehnungen erzielt, so daß das Gehäuse eine hohe Stabilität gegenüber mechanischen oder thermischen Einflüssen aufweist und somit die Geometrie des Laseroszillators bei starken mechanischen oder thermischen Beanspruchungen sicherstellt.

Das monolithische Lasergehäuse ist insbesondere für Festkörperlaser geeignet. Es läßt sich jedoch auch für Gaslaser oder Flüssigkeitslaser verwenden.

Vorzugsweise ist ein Meßsystem mit Lagesensoren für mechanische oder thermische reversible oder irreversible Verformungen vorgesehen, das mit einer Stelleinrichtung zum automatischen Ausgleich der Lage der Resonator-Komponenten zueinander verbunden ist. Als Sensoren eignen sich alle gängigen Lagesensoren elektrischer, optischer oder mechanischer Art, z.B. Dehnmeßstreifen. Überprüft werden Bezugsmarken, die vorzugsweise in einem optischen Kanal im Innern des Resonators angeordnet sind. Als optisches Meßmedium läßt sich der erzeugte Laserstrahl oder ein abgezweigter Strahl des erzeugten Laserstrahls verwenden. Dies erlaubt eine sehr korrekte Messung der Bezugsmarken. Vorzugsweise wird der Abstand zwischen den den Resonator begrenzenden optischen Komponenten vermessen. Es ist ausreichend, daß ein nur äußerst geringer Teil (weniger als 1 Promille) des erzeugten Laserstrahls für die Messung verwendet wird. Auf diese Weise wird die Leistung des Lasers effektiv nicht negativ beeinflußt.

Zumindest eine äußere Komponente des Resonators ist vorzugsweise auf einem Stellelement angeordnet, daß in eine axiale Verstellung, und möglichst auch eine Verkippung relativ zur Achse des Resonators zuläßt. Als derartige Stellelemente können alle Arten elektromechanischer Wandler verwendet werden, z.B. Servos und Schrittmotoren, Bimetalle oder piezoelektrische Stellelemente. Es ist eine Steuereinheit vorgesehen, durch die aus den Meßsignalen der Verformungsmeßeinrichtung Stellsignale zur Ansteuerung der Stellelemente abgeleitet werden. Alle Komponenten des Meß- und Stellsystems sind vorzugsweise im Inneren des monolithischen Gehäuseblocks angeordnet. Die elektrischen Anschlüsse für das Meßsystem sind auf eine Steckanordnung auf der Außenseite des Blocks geführt. In einer besonders einfachen und kostengünstigen Ausführungsform ist das Meß- und Stellsystem rein mechanisch konstruktiv ausgebildet. Die Bauform sollte derart gewählt werden, daß eine selbsttätige Temperaturkompensation eintritt.

Vorzugsweise läßt sich eine Wand des Gehäuseblocks abnehmen. Die Komponenten des Resonators, auch der Laserstab und die Pumpquelle, können dann einzeln radial montiert oder demontiert werden, so daß bei Austausch einer Komponente nur die entsprechende Komponente neu justiert werden muß. Vorzugsweise sind bei abgenommener Wand auch alle Komponenten des Kühl-, Meß- und Stellsystems frei zugänglich.

Ein Beispiel welches das Verständnis der Erfindung erleichtert wird nachfolgend beispielsweise in der schematischen Zeichnung beschrieben.

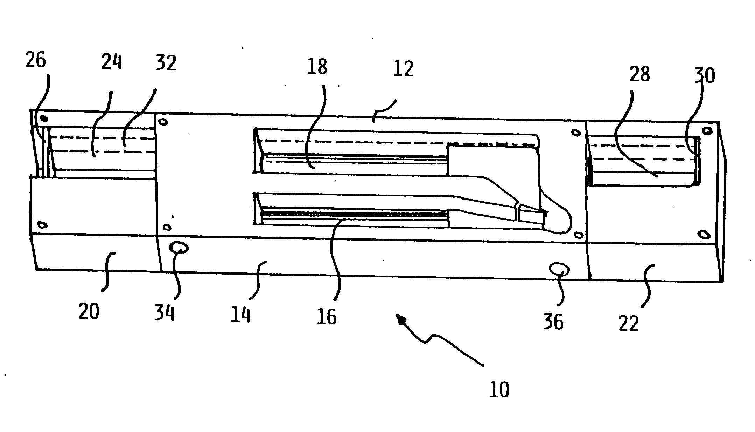

Die Zeichnung zeigt einen Festkörperlaser 10 mit einem kompakten Kunststoffgehäuse 12. Das Kunststoffgehäuse 12 besteht aus einem ersten Gehäuseteil 14 zur Aufnahme einer Pumpquelle 16 und eines Laserstabs 18 und aus zwei an dessen Stirnseite angesetzten Gehäuseteilen 20, 22, die mit dem ersten Gehäuseteil 14 untrennbar verklebt sind. Der Laserstab kann radial oder axial aus dem Gehäuse entnehmbar angeordnet sein. Das Gehäuse ist jedoch gemäß der Erfindung vorteilhafterweise aus einem einzigen Block geformt. Das zweite Gehäuseteil 20 enthält in Verlängerung des Laserstabs 18 einen Kanal 24, dessen zur Stirnseite hin offenes Ende durch einen teildurchlässigen Spiegel 26 verschlossen ist, der den ersten Teil des Laserresonators bildet. In dem dritten Gehäuseteil 22 ist ebenfalls in Verlängerung des Laserstabs 18 ein Kanal 28 ausgebildet, dessen Stirnfläche von einem totalreflektierenden Spiegel 30 gebildet ist. In den Kanälen 24,28 können gegebenenfalls auch weitere Komponenten angeordnet werden. Es ist klar, daß sich die Reflexionseigenschaften der Spiegel auf die Wellenlänge des emittierten Laserlichts beziehen. Das Laserlicht wird zwischen den beiden den Laserresonator bildenden Spiegeln 26, 30 in dem aktiven Material des Laserstabs, z.B. Neodym-YAG, verstärkt, so daß ein Teil des Laserstrahls durch den teildurchlässigen Spiegel 26 hindurchtritt.

In der Zeichnung ist gestrichelt ein Glaskeramikstab 32 eingezeichnet, der alle drei Gehäuseteile 14,20,22 durchsetzt und die beiden Resonatorspiegel 26,30 und vorzugsweise auch den Laserstab 18 miteinander verbindet. Vorzugsweise sind auf beiden Seiten der Kanäle 24,28 bzw. des Laserstabs 18 derartige Glaskeramik(z.B. Ceram)-stäbe angeordnet. Diese Stäbe können fest in das Kunststoffmaterial eingegossen oder durch ein dämpfungselastisches Material stoßsicher in dem Kunststoffgehäuse 12 gehalten sein. Durch die Ceramstäbe 32 wird eine temperaturunempfindliche geometrische Ausrichtung der Resonatorspiegel 26,30 des Laserstabs und gegebenenfalls weitere Komponenten relativ zueinander in dem Gehäuse 12 sichergestellt.

Auf das Gehäuse 12 ist ein nicht dargestellter Deckel aufschraubbar, der entweder nur den ersten Gehäuseteil 14 oder alle drei Gehäuseteile 14,20,22 staubdicht, wasser- und gasdicht nach außen hin abschließt. Es können auch für jedes Gehäuseteil 14,20,22 getrennte Deckel vorgesehen sein.

Wenn die in der Figur seitlich ausgeführten Kühlwasseröffnungen 34,36 in nicht dargestellter Weise zusammen mit den elektrischen Anschlüssen an eine Seite, z.B. die Stirnseite, des Gehäuses geführt werden, läßt sich der Laser auf einfache Weise als Steckmodul auf eine fertige Trägereinrichtung aufstecken. Die hohe Dichtigkeit des Gehäuses, verbunden mit der hohen mechanischen und thermischen Belastbarkeit prädestiniert den Laser für eine Anwendung in feuchten, sterilen oder gefährlichen Umgebungen. Weiterhin bietet sich aufgrund der Unempfindlichkeit des Lasers gegen Schmutz und Dämpfe und der Wartungsfreundlichkeit des Lasers ein industrieller Einsatz in schmutzbelasteten Arbeitsplätzen an.

Selbstverständlich können die Strahlerzeugungs- und -führungskomponenten in dem Gehäuseblock auch über Eck angeordnet werden, so daß sich eine verkürzte Bauform des Lasers ergibt.

## Patentansprüche

1. Festkörperlaser mit einer Pumpquelle (16), mit einem aktiven Material (18) und mindestens einer zusätzlichen, mindestens den Laserresonator bildenden optischen Komponente (26,30), wobei die Pumpquelle (16), das aktive Material (18) und die zusätzliche Komponente (26,30) in einem monolithischen Gehäuseblock (12) angeordnet sind, wobei ein Raum für die Pumpquelle und ein Raum zur Aufnahme des aktiven Materials durch einen Hohlraum des monolithischen Gehäuseblocks (12) gebildet sind, in welchem monolithischen Gehäuseblock ein Kühlsystem in Form eines Kühlkreislaufs untergebracht ist, das zur Kühlung des aktiven Materials (18), der Pumpquelle (16) und der zusätzlichen Komponenten (26,30) des Lasers vorgesehen ist.

2. Laser nach Anspruch 1,
dadurch **gekennzeichnet**,
daß der Gehäuseblock (12) aus faserverstärktem Kunststoff besteht.

3. Laser nach Anspruch 1,
dadurch **gekennzeichnet**,
daß der Gehäuseblock (12) aus Glas, Glaskeramik, Keramik oder Metall mit elektrisch isolierender und nicht korrosiver Oberfläche besteht.

4. Laser nach einem der vorhergehenden Ansprüche,
dadurch **gekennzeichnet**,
daß die optischen Komponenten (26,30) über axiale mechanische Versteifungselemente (32) miteinander verbunden sind.

5. Laser nach Anspruch 4,
dadurch **gekennzeichnet**,
daß das aktive Material (18) mit den Versteifungselementen (32) verbunden ist.

6. Laser nach Anspruch 4 oder 5,
dadurch **gekennzeichnet**,
daß die Versteifungselemente (32) mechanisch gedämpft in dem Gehäuseblock (12) gehalten sind.

7. Laser nach einem der vorhergehenden Ansprüche,
dadurch **gekennzeichnet**,
daß die Anschlüsse des Kühlsystems und die elektrischen Anschlüsse für die Laserkomponenten an einer Seite des Gehäuseblocks zusammengeführt sind, und
daß die Anschlüsse als Steckanschlüsse zur Verbindung mit einer Trägereinrichtung ausgebildet sind.

8. Laser nach einem der vorhergehenden Ansprüche,
dadurch **gekennzeichnet**,
daß weitere optische und mechanische Komponenten zur Strahlerzeugung und/oder Strahlführung in dem Gehäuseblock angeordnet sind.

9. Laser nach einem der vorhergehenden Ansprüche,
dadurch **gekennzeichnet**,
daß ein Meß- und Stellsystem zum Ausgleich mechanischer oder thermischer Verformungen vorgesehen ist, welches auf die Halterung zumindest einer Komponente des Laserresonators einwirkt.

10. Laser nach einem der vorhergehenden Ansprüche,
dadurch **gekennzeichnet**,
daß eine Wand abnehmbar an dem Gehäuseblock montiert ist, und daß alle Komponenten des Resonators einzeln radial in dem Gehäuseblock montierbar und demontierbar angeordnet sind.

## Claims

1. A solid state laser comprising a pump source (16) having an active material (18) and at least an additional optical component (26, 30) forming at least a laser resonator, said pump source (16), said active material (18) and said additional components (26, 30) being disposed in a monolithic housing block (12), a space for said pump source and a space for receiving said active material being formed by a cavity of said monolithic housing block (12) in which a cooling system in the form of a cooling circuit is contained which is provided for cooling said active material (18), said pump source (16) and said additional components (26, 30) of said laser.

2. The laser according to claim 1, characterized in that said housing block (12) is made of fiber-reinforced synthetic material.

3. The laser according to claim 1, characterized in that said housing block (12) is made of glass, glass ceramics, ceramics or metal having an electrically insulating and non-corrosive surface.

4. The laser according to any one of the preceding claims, characterized in that said optical components (26, 30) are connected to each other by means of axial, mechanical stiffening elements (32).

5. The laser according to claim 4, characterized in that said active material (18) is connected to said stiffening elements (32).

6. The laser according to claims 4 or 5, characterized in that said stiffening elements (32) are held in said housing block (12) with mechanical dampening.

7. The laser according to any one of the preceding claims, characterized in that terminals of a cooling system and electrical terminals for said laser components are merged on one side of the housing block, and that said terminals are formed as plug-in terminals to be connected to a support means.

8. The laser according to any one of the preceding claims, characterized in that further optical and mechanical components for beam generation and/or beam guiding are disposed in the housing block.

9. The laser according to any one of the preceding claims, characterized in that a measuring and positioning system for compensating mechanical or thermal deformations is provided which acts on the support means of at least one component of the laser resonator.

10. The laser according to any one of the preceding claims, characterized in that a wall is removeably fixed to the housing block and that all components of the resonator are individually and radially disposed in the housing block in a manner enabling assembly and disassembly.

## Revendications

1. Laser monolithique à semiconducteurs comprenant une source de pompage (16) ayant un matériau actif (18) et au moins une composante optique supplémentaire (26, 30) établissant au moins un résonateur à laser, ladite source de pompage (16), ledit matériau actif (18) et lesdites composantes supplémentaires (26, 30) étant disposés dans un bloc monolithique de boîtier (12), un espace pour ladite source de pompage et un espace pour accueillir ledit matériau actif étant formés par une cavité dudit bloc monolithique de boîtier (12), dans lequel un système de refroidissement sous forme de circuit de refroidissement est renfermé, destiné à refroidir ledit matériau actif (18), ladite source de pompage (16) et lesdites composantes supplémentaires (26, 30) dudit laser.

2. Laser selon la revendication 1, caractérisé en ce que ledit bloc de boîtier (12) est en matériau synthétique armé aux fibres.

3. Laser selon la revendication 1, caractérisé en ce que ledit bloc de boîtier (12) est en verre, en céramique de verre, en céramique ou en métal ayant une surface électriquement isolante et non corrosive.

4. Laser selon l'une quelconque des revendications précédentes, caractérisé en ce que lesdites composantes optiques (26, 30) sont reliées les unes aux autres par des éléments axiaux de raidissement mécanique (32).

5. Laser selon la revendication 4, caracterisé en ce que ledit matériau actif (18) est relié auxdits éléments de raidissement (32).

6. Laser selon la revendication 4 ou 5, caractérisé en ce que lesdits éléments de raidissement (32) sont maintenus dans ledit bloc de boîtier (12) avec amortissement mécanique.

7. Laser selon l'une quelconque des revendications précédentes, caractérisé en ce que des raccords d'un système de refroidissement et des bornes électriques pour lesdites composantes laser sont fusionnées d'un côté dudit bloc de boîtier, et que lesdits raccords et lesdites bornes sont des raccords et des bornes enfichables qui doivent être reliés à un moyen de support.

8. Laser selon l'une quelconque des revendications précédentes, caractérisé en ce que des composantes optiques et mécaniques supplémentaires pour la génération de faisceaux et/ou le guidage de faisceaux sont disposées dans ledit bloc de boîtier.

9. Laser selon l'une quelconque des revendications précédentes, caractérisé en ce qu'un système de mesure et de positionnement pour compenser des déformations mécaniques et thermiques est prévu qui agit sur le moyen de support d'au moins une composante dudit résonateur à laser.

10. Laser selon l'une quelconque des revendications précédentes, caractérisé en ce qu'une paroi est fixée de manière amovible audit bloc de boîtier et que toutes les composantes dudit résonateur sont chacune radialement disposées dans ledit bloc de boîtier de manière à être assemblées et désassemblées.
